(19) **Europäisches Patentamt European Patent Office Office européen des brevets**

(11) **EP 4 116 384 B1**

(12) **EUROPEAN PATENT SPECIFICATION**

(45) Date of publication and mention of the grant of the patent:
**19.11.2025 Bulletin 2025/47**

(21) Application number: **22176209.9**

(22) Date of filing: **30.05.2022**

(51) International Patent Classification (IPC):
*C09D 11/328* (2014.01)    *C09D 11/38* (2014.01)
*C09D 11/50* (2014.01)

(52) Cooperative Patent Classification (CPC):
**C09D 11/328; C09D 11/38; C09D 11/50**

(54) **INK COMPOSITION, INK-JET RECORDING APPARATUS, INK-JET RECORDING METHOD, AND INK CONTAINER**

TINTENZUSAMMENSETZUNG, TINTENSTRAHLAUFZEICHNUNGSGERÄT, TINTENSTRAHLAUFZEICHNUNGSVERFAHREN UND TINTENBEHÄLTER

COMPOSITION D'ENCRE, APPAREIL D'ENREGISTREMENT À JET D'ENCRE, PROCÉDÉ D'ENREGISTREMENT À JET D'ENCRE ET RÉSERVOIR D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2021 JP 2021091387**

(43) Date of publication of application:
**11.01.2023 Bulletin 2023/02**

(73) Proprietor: **BROTHER KOGYO KABUSHIKI KAISHA**
**Nagoya-shi, Aichi 467-8561 (JP)**

(72) Inventors:
- **TSUZAKA, Yuka**
  **Nagoya-shi, 467-8562 (JP)**
- **MAEDA, Mitsunori**
  **Nagoya-shi, 467-8562 (JP)**

(74) Representative: **Prüfer & Partner mbB**
**Patentanwälte · Rechtsanwälte**
**Sohnckestraße 12**
**81479 München (DE)**

(56) References cited:
WO-A1-2011/074750    WO-A1-2013/192268
JP-A- 2005 330 425    JP-A- 2012 131 937
JP-A- H11 140 358    US-A1- 2007 017 413

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

An erasable ink using a pH indicator which develops color in an alkaline state, for example, with phenolphthalein or the like, and erases color in a neutral state is known (JP2020-168807 A).

SUMMARY

While glycerin is used as the solvent (humectant) for such an ink, the pH indicator has poor solubility in glycerin and causes clogging of the printer. Further, due to poor solubility, there is a problem that an amount of the pH indicator contained in the ink is limited and the initial OD value is low. When the pH indicator concentration is increased to improve the OD value, it is necessary to increase the amount of sodium hydroxide added in order to dissolve the pH indicator. Then, the pH of the ink rises, which makes it difficult to erase the ink, that is, there is a problem that it is difficult to achieve both the initial OD value and the erasing ability.

With the foregoing in mind, it is an object of the present invention to provide an ink composition having good solubility, initial OD value, and erasing ability.

A first ink composition includes: water; a water-soluble organic solvent; and a color developing agent, wherein the color developing agent contains a pH indicator, the water-soluble organic solvent includes at least one water-soluble organic solvent having a SP value of 16 or less, and a blending amount of the water-soluble organic solvent having a SP value of 16 or less is 15 wt% or more. A blending amount of the pH indicator is 0.1 wt% to 0.8 wt%. The water-soluble organic solvent has an SP value of 16 or less and includes a diol type polyalkylene glycol. US2007017413 might be cited as background prior art.

Preferably, the water-soluble organic solvent has a SP value of 16 or less and 11 or more. The ink compositions may be used for ink-jet recording.

The ink composition is good in solubility, initial OD value, and erasing ability.

BRIEF DESCRIPTION OF THE DRAWINGS

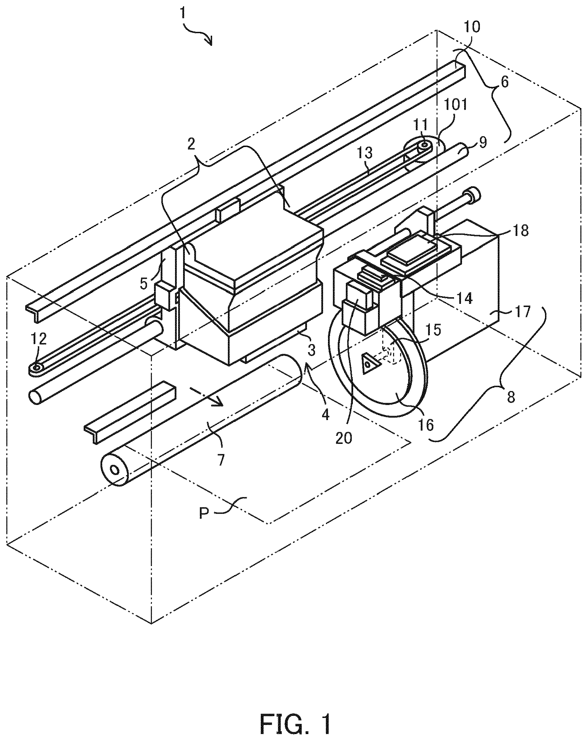

[FIG. 1] FIG. 1 is a schematic perspective view showing a configuration of an example of the ink-jet recording apparatus.

DETAILED DESCRIPTION

The ink composition will be described. As described above, the first ink composition includes: water; a water-soluble organic solvent; and a color developing agent, wherein the color developing agent contains a pH indicator, the water-soluble organic solvent includes at least one water-soluble organic solvent having a SP value of 16 or less, and a blending amount of the water-soluble organic solvent having a SP value of 16 or less is 15 wt% or more. A blending amount of the pH indicator is 0.1 wt% to 0.8 wt%. The water-soluble organic solvent has an SP value of 16 or less and includes a diol type polyalkylene glycol.
As described above, the second ink composition includes at least one water-soluble organic solvent having a SP value of 16 or less and 11 or more. In the present embodiment, the first ink composition and the second ink composition are collectively referred to as an "ink composition" (hereinafter, sometimes referred to as a "water-based ink", an "ink", or an "erasable ink").

The color developing agent may or may not contain, for example, a color developing agent other than a pH indicator, and the color developing agent preferably does not contain a color developing agent other than a pH indicator. When the color developing agent does not contain a color developing agent other than a pH indicator, for example, the erasing ability of an erasable ink is improved, which allows the recording content from not being checked after erasing the color.

The pH indicator is, for example, among reagents which discolor by a change in hydrogen ion concentration (change in pH) in a solution, a reagent which develops color in an alkaline state (for example, pH 9.8 to 13.4), softens the shade of the color as the pH is shifted to a neutral side, and erases (fades) color when the pH is in a neutral state (for example, pH 8.5 or less). A specific example of the pH indicator is at least one selected from the group consisting of phenolphthalein, thymolphthalein, and o-cresolphthalein. For example, one kind of the pH indicators may be used alone or two or more kinds of them may be used in combination. In the ink composition, the blending amount of the pH indicator ranges from 0.1 wt% to 0.8 wt%, and more preferably from 0.2 wt% to 0.8 wt%.

In the first ink composition, the water-soluble organic solvent includes, as described above, a water-soluble organic solvent having a SP value (solubility parameter) of 16 or less and preferably 11 or moreThe SP value is, for example, a value obtained by the following equation according to the Fedors method, and the unit of the SP value is $(cal/cm^3)^{1/2}$.

$$SP\ value = (\Sigma \Delta ei / \Sigma \Delta vi)^{1/2}$$

$\Delta ei$: evaporation energy of atoms and atomic groups (cal/mol)
$\Delta vi$: molar volume ($cm^3$/mol)

As the water-soluble organic solvent having a SP value of 16 or less and preferably 11 or more in the first ink composition, a conventionally known water-soluble organic solvent may be used as long as it is a water-soluble organic solvent having a SP value of 16 or less and 11 or more. For example, among humectants for preventing the ink from drying at a nozzle tip of an ink-jet head and penetrants for adjusting a drying speed on a recording medium, those having a SP value of 16 or less and 11 or more may be used. Specific examples of the water-soluble organic solvent having a SP value of 16 or less and 11 or more include methanol (SP value: 14.5 to 14.8), ethanol (SP value: 12.7), isopropanol (SP value: 11.5), n-butanol (SP value: 11.3), polyethylene glycol (SP value: 12.0) with a molecular weight of 200, diethylene glycol (SP value: 14.6), propylene glycol (SP value: 13.5), triethylene glycol (SP value: 13.6), tripropylene glycol (SP value: 11.5), 1,2-hexanediol (SP value: 11.8), and 2-pyrrolidone (SP value: 11.4), and preferably includes at least one of triethylene glycol or polyethylene glycol having a molecular weight of 200. One kind of the water-soluble organic solvents having a SP value of 16 or less and 11 or more may be used alone, or two or more kinds of them may be used in combination. In the latter case, for example, a total blending amount of two or more kinds of the water-soluble organic solvents having a SP value of 16 or less and 11 or more is 15 wt% or more relative to the total weight of the ink composition. In the water-soluble organic solvent having a SP value of 16 or less and 11 or more, the lower limit of the SP value is not particularly limited, and examples thereof include a SP value of 11 or more, a SP value of 12 or more, and a SP value of 13 or more. In the water-soluble organic solvent having a SP value of 16 or less and 11 or more, the SP value is preferably 11 or more, for example, because a time (erasing time) until the erasable ink is erased becomes longer as compared with a case where the SP value is less than 11, for example. The preferred erasing time is, for example, 6 hours or more and 72 hours or less. In this instance, for example, details of what printed on a printed matter printed using an erasable ink is visible on the day of recording, but after several days, the details of what printed on the printed matter is erased and becomes invisible. For this reason, the first ink composition may perform secure printing, for example.

As the water-soluble organic solvent having a SP value of 16 or less in the second ink composition, a conventionally known water-soluble organic solvent may be used as long as it is a water-soluble organic solvent having a SP value of 16 or less. For example, among humectants for preventing the ink from drying at a nozzle tip of an ink-jet head and penetrants for adjusting a drying speed on a recording medium, those having a SP value of 16 or less may be used. Specific examples of the water-soluble organic solvent having a SP value of 16 or less include methanol (SP value: 14.5 to 14.8), ethanol (SP value: 12.7), isopropanol (SP value: 11.5), n-butanol (SP value: 11.3), those having a SP value of 16 or less out of polyethylene glycols with a molecular weight of 200 or more (for example, polyethylene glycol (SP value: 12.0) with a molecular weight of 200), diethylene glycol (SP value: 14.6), propylene glycol (SP value: 13.5), triethylene glycol (SP value: 13.6), those having a SP value of 16 or less out of polypropylene glycols, tripropylene glycol (SP value: 11.5), 1,2-hexanediol (SP value: 11.8), propylene glycol monomethyl ether (SP value: 10.2), triethylene glycol monobutyl ether (SP value: 10.3), triethylene glycol-n-butyl ether (SP value: 9.8), tripropylene glycol-n-butyl ether (SP value: 9.2), and 2-pyrrolidone (SP value: 11.4). As the water-soluble organic solvent having a SP value of 16 or less, for example, a diol type polyalkylene glycol is preferably included. One kind of the water-soluble organic solvents having a SP value of 16 or less may be used alone, or two or more kinds of them may be used in combination. In the latter case, for example, a total blending amount of two or more kinds of the water-soluble organic solvents having a SP value of 16 or less is 15 wt% or more relative to the total weight of the ink composition.

The water-soluble organic solvent may or may not include other water-soluble organic solvents other than a water-soluble organic solvent having a SP value of 16 or less and 11 or more or a water-soluble organic solvent having a SP value of 16 or less, for example. Examples of the other water-soluble organic solvent include humectants for preventing the ink from drying at a nozzle tip of an ink-jet head and penetrants for adjusting a drying speed on a recording medium. The SP value of the other water-soluble organic solvent is not particularly limited, and may be, for example, 16 or less or 16 or more, and from the viewpoint of the solubility of the pH indicator contained in the color developing agent, it is preferable not to contain the other water-soluble organic solvent having an SP value of more than 16.

The humectant is not particularly limited, and examples thereof include lower alcohols such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones such as acetone; ketoalcohols such as diacetone alcohol; ethers such as tetrahydrofuran and dioxane; polyethers such as polyalkylene glycols; polyhydric alcohols such as alkylene glycol, glycerin, trimethylolpropane, and trimethylolethane; 2-pyrrolidone; N-methyl-2-pyrrolidone; and 1,3-dimethyl-2-imidazolidinone. Examples of the polyalkylene glycol include polyethylene glycol and polypropylene glycol. Examples of the alkylene glycol include ethylene glycol, propylene glycol, butylene glycol, diethylene glycol, triethylene glycol, dipropylene glycol, tripropylene glycol, thiodiglycol, and hexylene glycol. One kind of the humectants may be used alone or two or more kinds of them may be used in combination.

The blending amount of the humectant relative to the total amount of the ink composition is in the range, for example, from 0 wt% to 84.9 wt%, preferably 0 wt% to 20 wt%, and more preferably 0 wt% to 2 wt%.

The penetrant may be, for example, glycol ether. Examples of the glycol ether include ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, and tripropylene glycol-n-butyl ether. One kind of the penetrants may be used alone or two or more kinds of them may be used in combination.

The blending amount of the penetrant relative to the total amount of the ink composition is in the range, for example, from 0 wt% to 84.9 wt%, preferably from 0wt% to 20 wt%, and more preferably from 0 wt% to 2 wt%.

The ink composition may include, for example, a pH adjuster. Examples of the pH adjuster include an alkali metal hydroxide, an alkali metal carbonate, a hydroxide of Group II to Group XII element, a carbonate of Group II to Group XII element, and an amine. Specific examples of the pH adjuster include sodium hydrogen carbonate, potassium carbonate, calcium carbonate, sodium hydroxide, sodium carbonate, triethanolamine, N-butyldiethanolamine, sodium citrate (disodium citrate, trisodium citrate), sodium hydrogen carbonate, potassium phosphate (potassium dihydrogen phosphate, dipotassium hydrogen phosphate, tripotassium phosphate), trisodium phosphate, sodium hydrogen phosphate (disodium hydrogen phosphate, sodium dihydrogen phosphate), and sodium dihydrogen pyrophosphate. Among them, sodium hydrogen carbonate, potassium carbonate, calcium carbonate, sodium hydroxide, sodium carbonate, triethanolamine, and N-butyldiethanolamine are preferred. One kind of the pH adjusters may be used alone or two or more kinds of them may be used in combination. The blending amount of the pH adjuster in the ink composition is, for example, 5 wt% or less, or 3 wt% or less.

The water is preferably, for example, ion-exchanged water or pure water. The blending amount (water ratio) of the water relative to the total amount of the ink composition is appropriately determined according to desired ink characteristics and the like. The water ratio may be, for example, a balance of the other components. The blending amount of the water is in the range, for example, from 60 w% to 90 wt%, from 65 w% to 85 wt%, or from 70 w% to 85 wt%.

The ink composition may further contain conventionally known additives as needed. Examples of the additive include a surfactant, a viscosity modifier, a surface tension modifier, and a mildewproofing agent. Examples of the viscosity modifier include polyvinyl alcohol, cellulose, and a water-soluble resin.

The ink composition may be used, for example, but not limited to, for ink-jet recording. The ink composition may also be used in applications such as, for example, writing instruments such as pens, markers, and brushes; and coating materials.

Next, the ink container includes an ink, wherein the ink is the ink composition. Examples of the ink set container include an ink cartridge, a tank, and a pouch. As the main body of the ink container, for example, a conventionally known main body may be used.

Next, the ink-jet recording apparatus and the ink-jet recording method will be described.

The ink-jet recording apparatus includes a flow path and an ink ejection unit, wherein an ink supplied to the flow path is ejected by the ink ejection unit, and the ink composition is supplied to the flow path.

FIG. 1 shows a configuration of an example of the ink-jet recording apparatus. As shown in FIG. 1, the ink-jet recording apparatus 1 includes an ink cartridge 2, an ink ejection unit (ink-jet head) 3, a head unit 4, a carriage 5, a drive unit 6, a platen roller 7, and a purge device 8 as main components. Although it is not shown in FIG. 1, the ink cartridge 2 and the ink ejection unit 3 are connected by a flow path, the ink composition is supplied from the ink cartridge 2 containing the ink composition to the flow path, and the ink ejection unit 3 ejects the ink composition on a recording medium.

The ink cartridge 2 contains the ink composition, for example. As the main body of the ink cartridge, for example, a conventionally known main body may be used.

Also, although it is not shown in FIG. 1, the ink-jet recording apparatus 1 may include, in addition to the ink cartridge 2 containing the ink composition, a set of four ink cartridges each containing each of four water-based color inks, yellow, magenta, cyan, and black. In addition, in place of the set of four ink cartridges, an integrated ink cartridge, the inside thereof is partitioned so as to form a water-based yellow ink storage portion, a water-based magenta ink storage portion, a water-based cyan ink storage portion, and a water-based black ink storage portion, may be used.

The ink-jet head 3 installed in the head unit 4 performs recording on a recording medium (for example., recording paper) P. The ink cartridge 2 and the head unit 4 are mounted on the carriage 5. The drive unit 6 reciprocates the carriage 5 in the linear direction. As the drive unit 6, for example, a conventionally known drive unit may be used (see, for example, JP 2008-246821A). The platen roller 7 extends in the reciprocating direction of the carriage 5 and is disposed to face the ink-jet head 3.

The purge device 8 sucks defective ink containing bubbles and the like pooled inside the ink-jet head 3. As the purge device 8, for example, a conventionally known purge device may be used (see, for example, JP 2008-246821A).

On the platen roller 7 side of the purge device 8, a wiper member 20 is disposed adjacent to the purge device 8. The wiper member 20 is formed in a spatula shape and is configured to wipe the nozzle forming surface of the ink-jet head 3 in accordance with the movement of the carriage 5. In FIG. 1, the cap 18 is configured to cover a plurality of nozzles of the ink-jet head 3 which are configured to return to the reset position when the recording is completed, in order to prevent the ink from drying.

In the ink-jet recording apparatus 1 of the present embodiment, the ink cartridge 2 is mounted on one carriage 5 together with the head unit 4. However, the ink-jet recording apparatus 1 is not limited thereto. In the ink-jet recording apparatus 1, the ink cartridge 2 may be mounted on a carriage which is different from the one on which the head unit 4 is mounted. The ink cartridge 2 may be disposed and fixed in the ink-jet recording apparatus 1 without being mounted on the carriage 5. In these embodiments, for example, the ink cartridge 2 and the head unit 4 mounted on the carriage 5 are connected by the flow path such as a tube, and the ink is supplied from the ink cartridge 2 to the head unit 4. In these embodiments, a bottle-shaped ink bottle may be used instead of the ink cartridge 2. In this case, an inlet through which an ink is injected from the outside into the inside is preferably provided in the ink bottle, for example.

Ink-jet recording using the ink-jet recording apparatus 1 is performed, for example, as follows. First, the recording paper P is fed from a paper feed cassette (not shown) provided on the side or below the ink-jet recording apparatus 1. The recording paper P is introduced between the ink-jet head 3 and the platen roller 7. On the introduced recording paper P, a predetermined recording is performed by the water-based ink ejected from the ink-jet head 3. The recording sheet P after recording is ejected from the ink-jet recording apparatus 1. In FIG. 1, a sheet feeding mechanism and a sheet ejecting mechanism of the recording sheet P are not shown.

Although the apparatus shown in FIG. 1 employs a serial ink-jet head, the apparatus is not limited thereto. The ink-jet recording apparatus may be an apparatus that employs a line ink-jet head or the printing apparatus may be a roll-to-roll printing apparatus.

Next, the ink-jet recording method is an ink-jet recording method for recording by ejecting an ink on a recording medium by an ink-jet method, wherein the ink composition is used as the ink. The ink-jet recording method may be performed, for example, using the ink-jet recording apparatus. The recording includes character-printing, image-printing, printing, and the like.

Examples

Examples and comparative examples are described below. The present invention, however, is not limited by the following examples and comparative example.

(Preparation of erasable ink)

Components of the erasable ink composition summarized in Table 1 were uniformly mixed to obtain erasable inks of Examples 1 to 13. Further, components of the erasable ink composition summarized in Table 2 were uniformly mixed to obtain erasable inks of Comparative Examples 1 to 5. In Tables 1 and 2 below, the numbers in parentheses indicate the SP values of components. The solubility of the color developing agent in the erasable inks of Examples 1 to 13 and Comparative Examples 1 to 5 was evaluated. The erasable inks of Examples 1 to 13 and Comparative Examples 1 to 5 were applied to recording paper (trade name: ASKUL Super White +, ASKUL Corporation), and the initial OD value, the visibility on the day of recording, and the erasing ability were examined by the following methods. The test results of the erasable inks are also summarized in Tables 1 and 2 below. Example 13 is now reference example 13 and not according to the invention.

Table 1

| | | | Ex. 1 | Ex. 2 | Ex. 3 | Ex. 4 | Ex. 5 | Ex. 6 | Ex. 7 |
|---|---|---|---|---|---|---|---|---|---|
| Composition | Color developing agent (pH indicator) | Thymolphthalein | 0.5 | 0.5 | 0.5 | 0.5 | 0.5 | | |
| | | Phenolphthalein | | | | | | 0.5 | |
| | | o-cresolphthalein | | | | | | | 0.5 |
| | Water-soluble organic solvent | Triethylene glycol (SP value: 13.6) | 15.0 | 20.0 | | | 18.0 | 20.0 | 20.0 |
| | | Polyethylene glycol (molecular weight: 200) (SP value: 12.0) | | | 18.0 | | | | |
| | | Tripropylene glycol (SP value: 11.5) | | | | 20.0 | | | |
| | | Glycerin (SP value: 17.5) | | | | | | 2.0 | |
| | | Triethylene glycol monobutyl ether (SP value: 10.3) | | | | | | 2.0 | |
| | Surfactant | SURFYNOL® 440 (SP value: 10) | 0.5 | 0.5 | 0.5 | 0.5 | 0.5 | 0.5 | 0.5 |
| | pH adjuster | Sodium hydroxide | 2.4 | 2.4 | 2.4 | 2.4 | 2.4 | 2.4 | 2.4 |
| | Solvent | Water | 81.6 | 76.6 | 78.6 | 76.6 | 74.6 | 76.6 | 76.6 |
| Result | Solubility | A: completely dissolved. B: precipitate was formed at room temperature | A | A | A | A | A | A | A |

| | | | | | | | | | |
|---|---|---|---|---|---|---|---|---|---|
| | | 1 month after stirring. C: precipitate was observed immediately after stirring. | | | | | | | |
| | Initial OD value | A: equation (1) was achieved or OD value was 0.40 or more. B: equation (1) was achieved or OD value was 0.25 or more. C: equation (1) was not achieved and OD value was 0.25 or less. Equation (1) y > 0.75x + 0.05 x: amount of pH indicator in ink y: OD value | 0.50 | 0.50 | 0.48 | 0.48 | 0.50 | 0.45 | 0.43 |
| | Visibility on the day of recording (OD value after 6h) | A: OD value difference between recorded paper and blank paper was 0.10 or more. B: OD value difference between recorded paper and blank paper was less than 0.10. | 0.35 | 0.35 | 0.33 | 0.32 | 0.35 | 0.25 | 0.35 |
| | Erasing ability (OD value after 72h) | A: OD value difference between recorded paper and blank paper was less than 0.03. B: OD value difference between recorded paper and blank paper was less than 0.10. | 0.01 | 0.01 | 0.01 | 0.01 | 0.01 | 0.02 | 0.01 |

| | | | | | | | | | |
|---|---|---|---|---|---|---|---|---|---|
| | | C: OD value difference between recorded paper and blank paper was 0.10 or more. | | | | | | | |

| | | | | Ex. 8 | Ex. 9 | Ref. Ex. 10 | Ref. Ex. 11 | Ref. Ex. 12 | Ex. 13 |
|---|---|---|---|---|---|---|---|---|---|
| Composition | | Color developing agent (pH indicator) | Thymolphthalein | 0.2 | 0.1 | 1.0 | 1.0 | 4.0 | 0.5 |
| | | | Phenolphthalein | | | | | | |
| | | | o-cresolphthalein | | | | | | |
| | | Water-soluble organic solvent | Triethylene glycol (SP value: 13.6) | 20.0 | 20.0 | 20.0 | 20.0 | 20.0 | |
| | | | Polyethylene glycol (molecular weight: 200) (SP value: 12.0) | | | | | | |
| | | | Tripropylene glycol (SP value: 11.5) | | | | | | |
| | | | Glycerin (SP value: 17.5) | | | | | | |
| | | | Triethylene glycol monobutyl ether (SP value: 10.3) | | | | | | 15.0 |
| | | Surfactant | SURFYNOL® 440 (SP value: 10) | 0.5 | 0.5 | 0.5 | 0.5 | 0.5 | 0.5 |
| | | pH adjuster | Sodium hydroxide | 2.4 | 2.4 | 2.4 | 4.8 | 4.8 | 2.4 |

| | | | | Ex. 8 | Ex. 9 | Ref. Ex. 10 | Ref. Ex. 11 | Ref. Ex. 12 | Ex. 13 |
|---|---|---|---|---|---|---|---|---|---|
| Results | | Solvent | Water | 76.9 | 77.0 | 76.1 | 73.7 | 70.7 | 81.6 |
| | | Solubility | A: completely dissolved. B: precipitate was formed at room temperature 1 month after stirring. C: precipitate was observed immediately after stirring. | A | A | B | A | B | A |
| | | Initial OD value | A: equation (1) was achieved or OD value was 0.40 or more. B: equation (1) was achieved or OD value was 0.25 or more. C: equation (1) was not achieved and OD value was 0.25 or less. Equation (1) y > 0.75x + 0.05 x: amount of pH indicator in ink y: OD value | 0.35 | 0.22 | 0.72 | 0.72 | 0.97 | 0.53 |
| | | Visibility on the day of recording (OD value after 6h) | A: OD value difference between recorded paper and blank paper was 0.10 or more. B: OD value difference between recorded paper and blank paper was less than 0.10. | 0.22 | 0.12 | 0.60 | 0.68 | 0.78 | 0.03 |
| | | Erasing ability (OD value after 72h) | A: OD value difference between recorded paper and blank paper was less than 0.03. B: OD value difference between recorded paper and blank paper was less than 0.10. C: OD value difference between recorded paper and blank paper was 0.10 or more. | 0.01 | 0.01 | 0.02 | 0.05 | 0.09 | 0.01 |

Table 2

| | | | Com. Ex. 1 | Com. Ex. 2 | Com. Ex. 3 | Com. Ex. 4 | Com. Ex. 5 |
|---|---|---|---|---|---|---|---|
| Composition | Color developing agent (pH indicator) | Thymolphthalein | 0.5 | 0.5 | | | |
| | | Phenolphthalein | | | 0.5 | 0.1 | |
| | | o-cresolphthalein | | | | | 0.5 |
| | Water-soluble organic solvent | Triethylene glycol (SP value: 13.6) | | 10.0 | | | |
| | | Polyethylene glycol (molecular weight: 200) (SP value: 12.0) | | | | | |
| | | Tripropylene glycol (SP value: 11.5) | | | | | |
| | | Glycerin (SP value: 17.5) | 20.0 | | 15.0 | 20.0 | 15.0 |
| | | Triethylene glycol monobutyl ether (SP value: 10.3) | | | | | |

| | | | Com. Ex. 1 | Com. Ex. 2 | Com. Ex. 3 | Com. Ex. 4 | Com. Ex. 5 |
|---|---|---|---|---|---|---|---|
| | Surfactant | SURFYNOL® 440 (SP value: 10) | 0.5 | 0.5 | 0.5 | 0.5 | 0.5 |
| | pH adjuster | Sodium hydroxide | 2.4 | 2.4 | 2.4 | 2.4 | 2.4 |
| | Solvent | Water | 76.6 | 86.6 | 81.6 | 77.0 | 81.6 |
| Results | Solubility | A: completely dissolved. B: precipitate was formed at room temperature 1 month after stirring. C: precipitate was observed immediately after stirring. | C | C | C | B | C |
| | Initial OD value | A: equation (1) was achieved or OD value was 0.40 or more. B: equation (1) was achieved or OD value was 0.25 or more. C: equation (1) was not achieved and OD value was 0.25 or less. Equation (1) y > 0.75x + 0.05 x: amount of pH indicator in ink y: OD value | 0.34 | 0.40 | 0.36 | 0.10 | 0.33 |
| | Visibility on the day of recording | A: OD value difference between recorded paper and blank paper was 0.10 or more. | 0.22 | 0.28 | 0.17 | 0.05 | 0.18 |

| | | | Com. Ex. 1 | Com. Ex. 2 | Com. Ex. 3 | Com. Ex. 4 | Com. Ex. 5 |
|---|---|---|---|---|---|---|---|
| | (OD value after 6h) | B: OD value difference between recorded paper and blank paper was less than 0.10. | | | | | |
| | Erasing ability (OD value after 72h) | A: OD value difference between recorded paper and blank paper was less than 0.03. B: OD value difference between recorded paper and blank paper was less than 0.10. C: OD value difference between recorded paper and blank paper was 0.10 or more. | 0.02 | 0.02 | 0.01 | 0.02 | 0.01 |

(Solubility)

The solubility of each erasable ink was evaluated after mixing the components based on the following criteria.

A: completely dissolved.
B: precipitate was formed at room temperature 1 month after stirring.
C: precipitate was observed immediately after stirring.

(Initial OD Value)

The initial OD value (optical density) was measured by a spectrocolorimeter SpectroEye® (light source: D50, viewing angle: 2°, ANSI-T) produced by X-Rite immediately after application of each erasable ink, and evaluated based on the following criteria.

A: equation (1) was achieved or OD value was 0.40 or more.
B: equation (1) was achieved or OD value was 0.25 or more.
C: equation (1) was not achieved and OD value was 0.25 or less.

$$\text{Equation (1)} \quad y > 0.75x + 0.05$$

x: amount of pH indicator in ink
y: OD value

(Visibility on the day of recording)

The OD value was measured after 6 hours standing after recording of each ink on a recording medium and the visibility on the day of recording was evaluated based on the following criteria.

A: OD value difference between recorded paper and blank paper was 0.10 or more.
B: OD value difference between recorded paper and blank paper was less than 0.10.

(Erasing ability)

The OD value was measured after 72 hours (3 days) standing after recording of each ink on a recording medium and the erasing ability was evaluated based on the following criteria.

A: OD value difference between recorded paper and blank paper was less than 0.03.
B: OD value difference between recorded paper and blank paper was less than 0.10.
C: OD value difference between recorded paper and blank paper was 0.10 or more.

As summarized in Tables 1 and 2, all of the erasable inks of Examples / Reference Examples 1 to 13 had good evaluation A or B of the solubility, initial OD value, and erasing ability. Furthermore, all of the erasable inks of Examples / Reference Examples 1 to 13 had good evaluation A of the visibility on the day of recording. Therefore, from the viewpoint of achieving both of the visibility on the day of recording and the erasing ability, it was suggested that the SP value of the water-soluble organic solvent is preferably 16 or less and 11 or more in the erasable ink. On the other hand, all of the erasable inks of Comparative Examples 1 to 3 and 5 had poor evaluation C of solubility, and a precipitate was observed immediately after stirring. In addition, the erasable ink of Comparative Example 4 had poor evaluation C of the initial OD and the visibility on the day of recording, and the recorded image was blurry.

**Claims**

1. An ink composition, comprising:

water;
a water-soluble organic solvent; and
a color developing agent, wherein

the color developing agent contains a pH indicator,
the water-soluble organic solvent includes at least one water-soluble organic solvent having a SP value of 16 or less, and
a blending amount of the water-soluble organic solvent more is 15 wt% or more,
wherein a blending amount of the pH indicator is 0.1 wt% to 0.8 wt%,
wherein the water-soluble organic solvent has an SP value of 16 or less and
includes a diol type polyalkylene glycol.

2. An ink composition according to claim 1, wherein
the water-soluble organic solvent includes at least one water-soluble organic solvent having a SP value of 16 or less and 11 or more.

3. The ink composition according to claim 1 or 2, wherein
the pH indicator includes at least one selected from the group consisting of phenolphthalein, thymolphthalein, and o-cresolphthalein.

4. The ink composition according to any one of claims 1 to 3, wherein
a blending amount of the pH indicator is 0.2 wt% to 0.8 wt%.

5. The ink composition according to any one of claims 1 to 4, further comprising:

a pH adjuster, wherein
a blending amount of the pH adjuster is 5 wt% or less.

6. The ink composition according to claim 5, wherein
a blending amount of the pH adjuster is 3 wt% or less.

7. An ink-jet recording apparatus, comprising:

a flow path; and
an ink ejection unit, wherein
an ink supplied to the flow path is ejected to a recording medium by the ink ejection unit, and
the ink composition according to any one of claims 1 to 6 is supplied to the flow path.

8. An ink-jet recording method, comprising:
recording by ejecting an ink on a recording medium by an ink-jet method, wherein in the recording, the ink composition according to any one of claims 1 to 9 is used as the ink.

9. Use of an ink composition according to one of claims 1 to 6 for ink-jet recording.


**Patentansprüche**

1. Tintenzusammensetzung, umfassend:

Wasser;
ein wasserlösliches organisches Lösungsmittel; und
ein Farbentwicklungsmittel, wobei
das Farbentwicklungsmittel einen pH-Indikator enthält,
das wasserlösliche organische Lösungsmittel mindestens ein wasserlösliches organisches Lösungsmittel mit einem SP-Wert von 16 oder weniger enthält, und
eine Mischungsmenge des wasserlöslichen organischen Lösungsmittels mehr 15 Gew.-% oder mehr beträgt,
wobei eine Mischungsmenge des pH-Indikators 0,1 Gew.-% bis 0,8 Gew.-% beträgt,
wobei das wasserlösliche organische Lösungsmittel einen SP-Wert von 16 oder weniger aufweist und ein Polyalkylenglycol vom Dioltyp enthält.

2. Tintenzusammensetzung gemäß Anspruch 1, wobei
das wasserlösliche organische Lösungsmittel mindestens ein wasserlösliches organisches Lösungsmittel mit einem SP-Wert von 16 oder weniger und 11 oder mehr enthält.

**3.** Tintenzusammensetzung gemäß Anspruch 1 oder 2, wobei
der pH-Indikator mindestens eines ausgewählt aus der Gruppe bestehend aus Phenolphthalein, Thymolphthalein und o-Kresolphthalein enthält.

**4.** Tintenzusammensetzung gemäß einem der Ansprüche 1 bis 3, wobei
eine Mischungsmenge des pH-Indikators 0,2 Gew.-% bis 0,8 Gew.-% beträgt.

**5.** Tintenzusammensetzung gemäß einem der Ansprüche 1 bis 4, ferner umfassend:

einen pH-Einsteller, wobei
eine Mischungsmenge des pH-Einstellers 5 Gew.-% oder weniger beträgt.

**6.** Tintenzusammensetzung gemäß Anspruch 5, wobei
eine Mischungsmenge des pH-Einstellers 3 Gew.-% oder weniger beträgt.

**7.** Tintenstrahlaufzeichnungsvorrichtung, umfassend:

einen Strömungsweg; und
eine Tintenausstoßeinheit, wobei
eine dem Strömungsweg zugeführte Tinte durch die Tintenausstoßeinheit auf ein Aufzeichnungsmedium ausgestoßen wird, und
die Tintenzusammensetzung gemäß einem der Ansprüche 1 bis 6 dem Strömungsweg zugeführt wird.

**8.** Tintenstrahlaufzeichnungsverfahren, umfassend:

Aufzeichnen durch Ausstoßen einer Tinte auf ein Aufzeichnungsmedium durch ein Tintenstrahlverfahren, wobei beim Aufzeichnen die Tintenzusammensetzung gemäß einem der Ansprüche 1 bis 9 als die Tinte verwendet wird.

**9.** Verwendung einer Tintenzusammensetzung gemäß einem der Ansprüche 1 bis 6 zum Tintenstrahlaufzeichnen.

**Revendications**

**1.** Composition d'encre, comprenant :

de l'eau ;
un solvant organique soluble dans l'eau ; et
un agent de développement de couleur, où
l'agent de développement de couleur contient un indicateur de pH,
le solvant organique soluble dans l'eau comprend au moins un solvant organique soluble dans l'eau ayant une valeur SP de 16 ou moins, et
une quantité de mélange du solvant organique soluble dans l'eau est supérieure ou égale à 15 % en poids,
où une quantité de mélange de l'indicateur de pH est de 0,1 % en poids à 0,8 % en poids,
où le solvant organique soluble dans l'eau a une valeur SP de 16 ou moins et comprend un polyalkylène glycol de type diol.

**2.** Composition d'encre selon la revendication 1, où
le solvant organique soluble dans l'eau comprend au moins un solvant organique soluble dans l'eau ayant une valeur SP de 16 ou moins et 11 ou plus.

**3.** Composition d'encre selon la revendication 1 ou 2, où
l'indicateur de pH comprend au moins un choisi dans le groupe consistant en la phénolphtaléine, la thymolphtaléine et l'o-crésolphtaléine.

**4.** Composition d'encre selon l'une quelconque des revendications 1 à 3, où

une quantité de mélange de l'indicateur de pH est de 0,2 % en poids à 0,8 % en poids.

5. Composition d'encre selon l'une quelconque des revendications 1 à 4, comprenant en outre :

un ajusteur de pH, où
une quantité de mélange de l'ajusteur de pH est inférieure ou égale à 5 % en poids.

6. Composition d'encre selon la revendication 5, où
une quantité de mélange de l'ajusteur de pH est inférieure ou égale à 3 % en poids.

7. Appareil d'enregistrement à jet d'encre, comprenant :

un trajet d'écoulement ; et
une unité d'éjection d'encre, où
une encre fournie au trajet d'écoulement est éjectée sur un support d'enregistrement par l'unité d'éjection d'encre, et
la composition d'encre selon l'une quelconque des revendications 1 à 6 est fournie au trajet d'écoulement.

8. Procédé d'enregistrement à jet d'encre, comprenant :

l'enregistrement par éjection d'une encre sur un support d'enregistrement par un procédé à jet d'encre, où
dans l'enregistrement, la composition d'encre selon l'une quelconque des revendications 1 à 9 est utilisée en tant qu'encre.

9. Utilisation d'une composition d'encre selon l'une des revendications 1 à 6 pour l'enregistrement à jet d'encre.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020168807 A
- US 2007017413 A
- JP 2008246821 A